# EUROPEAN PATENT APPLICATION

(11) **EP 4 729 985 A2**
(43) Date of publication of application: **22.04.2026**
(21) Application number: 25222245.0
(22) Date of filing: 10.12.2025
(51) Int. Cl.: G01S 13/42, G01S 13/50, G01S 13/86, G01S 13/931, G01S 17/42, G01S 17/50, G01S 17/931

(54) **METHOD AND APPARATUS FOR DETERMINING OBJECT STATE INFORMATION, MEDIUM, DEVICE AND PROGRAM PRODUCT**

(30) Priority: 28.05.2025 CN 202510706129
(71) Applicant: Nanjing Horizon Information Technology Co., Ltd., Nanjing, Jiangsu 210046 (CN)
(72) Inventor: PAN, Mingxing, NanJing (CN); GE, Zhaohao, NanJing (CN); YUAN, Xianzhe, NanJing (CN)
(74) Representative: Müller-Boré & Partner Patentanwälte PartG mbB

(57) **Abstract**

Disclosed herein are a method and an apparatus for determining object state information, a medium, a device and a program product, including: obtaining first state information of an object observed at a first time point and second state information of the object observed at a second time point through different observation manners, where the second time point is earlier than the first time point; for any of the observation manners, determining a first sub-weight based on the first state information and the second state information, and determining a second sub-weight based on the first state information; for any of the observation manners, determining a fusion weight based on the first sub-weight and the second sub-weight; and determining state information of the object at the first time point based on the first state information observed using the different observation manners and corresponding fusion weights. According to embodiments of the present disclosure, a fusion weight is adaptively determined based on state information observed using any of observation manners, which improves the reliability of the fused state information.

## Description

### FIELD

The present disclosure relates to the field of intelligent driving technology, and more specifically, to a method and an apparatus for determining object state information, a medium, a device and a program product.

### BACKGROUND

In the intelligent driving field, a vehicle is typically equipped with multiple sensors such as a visual sensor, LiDAR (light detection and ranging) and the like, to observe the driving environment. This enables state estimation of surrounding dynamic objects, thereby providing accurate input for downstream tasks such as task behavior prediction, object trajectory prediction, and vehicle traveling path planning.

Due to differences in installation positions and sensor parameters among different sensors, the observations of the same object in the real world obtained by different sensors may vary, resulting in errors in in state estimation of the object, which in turn affects the execution of downstream tasks.

### SUMMARY

In order to address the above-mentioned technical problem, the present disclosure provides a method and an apparatus for determining object state information, a medium, a device and a program product. Embodiments of the disclosure dynamically design fusion weights based on stability and reliability of object state information observed from different observation manners, thereby achieving adaptive fusion of state information of an object observed from the different observation manners.

In a first aspect of embodiments of the present disclosure, there is a method for determining object state information, comprising: obtaining first state information of an object observed at a first time point and second state information of the object observed at a second time point through different observation manners, wherein the second time point is earlier than the first time point; for any of the observation manners, determining a first sub-weight based on the first state information and the second state information, and determining a second sub-weight based on the first state information; for any of the observation manners, determining a fusion weight based on the first sub-weight and the second sub-weight; and determining state information of the object at the first time point based on the first state information observed using the different observation manners and corresponding fusion weights.

In a second aspect of embodiments of the present disclosure, there is provided an apparatus for determining object state information, comprising: a state obtainment module configured to obtain first state information of an object observed at a first time point and second state information of the object observed at a second time point through different observation manners, wherein the second time point is earlier than the first time point; a weight determination module configured to determine, for any of the observation manners, a first sub-weight based on the first state information and the second state information, and determine a second sub-weight based on the first state information; a fusion weight determination module configured to determine, for any of the observation manners, a fusion weight based on the first sub-weight and the second sub-weight; and a state determination module configured to determine state information of the object at the first time point based on the first state information observed using the different observation manners and corresponding fusion weights.

In a third aspect of embodiments of the present disclosure, there is provided a computer readable storage medium having computer program instructions stored thereon, wherein the computer program instructions, when executed, implement the method for determining object state information described above.

In a fourth aspect of embodiments of the present disclosure, there is provided an electronic device, comprising: a memory for storing a computer program product; and a processor for executing the computer program product stored in the memory, wherein the computer program product, when executed, implements the method for determining object state information described above.

In a fifth aspect of embodiments of the present disclosure, there is provided a computer program product comprising computer program instructions, wherein the computer program instructions, when executed by a processor, implement the method for determining object state information described above.

According to the embodiments of the present disclosure, first state information of an object observed at a first time point and second state information of the object observed at a second time point can be obtained through different observation manners, where the second time point is earlier than the first time point; for any of the observation manners, a first sub-weight is determined based on the first state information and the second state information, and a second sub-weight is determined based on the first state information; for any of the observation manners, a fusion weight is determined based on the first sub-weight and the second sub-weight; and state information of the object at the first time point is determined based on the first state information observed using the different observation manners and corresponding fusion weights. In this way, the fusion weights are adaptively determined based on the state information from the observation manners. This improves the reliability of the fused state information, thereby providing more accurate input for downstream tasks such as object behavior prediction, object trajectory prediction, vehicle travelling path planning, vehicle motion control, and thus enhancing vehicle driving safety.

### BRIEF DESCRIPTION OF THE DRAWINGS

Through detailed description of the embodiments of the present disclosure with reference to the drawings, the above and other objectives, features, and advantages of the embodiments of the present disclosure will be made clearer. The drawings are used to provide further understanding on the embodiments of the present disclosure, and formulate a part of the Description and explain, together with the embodiments described herein, the present disclosure, without forming any limitation to the present disclosure. In the drawings, the same or similar reference signs represent the same components or steps.
Fig. 1 illustrates an example application scenario according to example embodiments of the present disclosure;
Fig. 2 illustrates a schematic flowchart of determining object state information according to example embodiments of the present disclosure;
Fig. 3 illustrates a schematic flowchart of determining a first sub-weight in a step 202 according to example embodiments of the present disclosure;
Fig. 4 illustrates a schematic flowchart of determining a second sub-weight in the step 202 according to example embodiments of the present disclosure;
Fig. 5 illustrates a schematic flowchart of a step 203 according to example embodiments of the present disclosure;
Fig. 6 illustrates a block diagram of an apparatus for determining object state information according to an example embodiment of the present disclosure;
Fig. 7 illustrates a block diagram of an apparatus for determining object state information according to another example embodiment of the present disclosure; and
Fig. 8 illustrates a diagram of a structure of an electronic device according to example embodiments of the present disclosure.

### DETAILED DESCRIPTION OF EMBODIMENTS

In order to make the present disclosure clear, reference below will be made to drawings to describe in detail example embodiments of the present disclosure. Apparently, the embodiments described herein are only a part of the embodiments of the present disclosure, not all of them. It would be appreciated that the present disclosure is not limited to those example embodiments.

It is worth noting that: unless indicated clearly otherwise, the relative arrangement, numerical expressions, and numerical values of components and steps described in those embodiments do not limit the scope of the present disclosure.

### Overview of present disclosure

In the process of formulating the present disclosure, through research, the inventor has found that, in the intelligent driving field (including assisted driving and autonomous driving), state estimation of dynamic objects such as pedestrians, vehicles is necessary. For example, state estimation of objects can provide an accurate basis for downstream tasks such as object behavior prediction, object trajectory prediction, vehicle traveling path planning, and the like.

In the related technology, for the same dynamic object, due to differences in the observation ranges, the observation errors, and the like, of sensors corresponding to different observation manners, the observed object state information may vary, thus making it difficult to provide an accurate basis for downstream tasks such as object behavior prediction, object trajectory prediction, vehicle traveling path planning, and the like, and thus affecting execution of the downstream tasks.

In the embodiments of the present disclosure, the observation manner is determined based on positions, types, and/or the like, of the sensors deployed on the vehicle.

According to different positions of sensors, the observation manner may be any observation manner including, but not limited to, a front view observation, a rear view observation, a side view observation, a panoramic view observation, a Bird's Eye View (BEV) observation, or the like, which is not specifically limited herein. For example, the front view observation information can be obtained based on image data acquired by a front view camera and point cloud data collected by forward-mounted LiDAR. For another example, rear view observation information can be obtained based on image data acquired by a rear view camera and point cloud data acquired by a rear-oriented millimeter-wave radar.

According to different types of sensors, the observation manner may be any observation manner including a visual observation, a laser observation, a radar observation, a multi-mode observation, and the like, which is not specifically limited herein. For example, multimodal observation information can be obtained based on data acquired by the cameras, LiDAR, and millimeter-wave radar. By fusing the multimodal sensor data, the present disclosure can improve the robustness and spatiotemporal consistency of observation information, and thus enhance the stability and reliability of the sensing system.

### Example Application

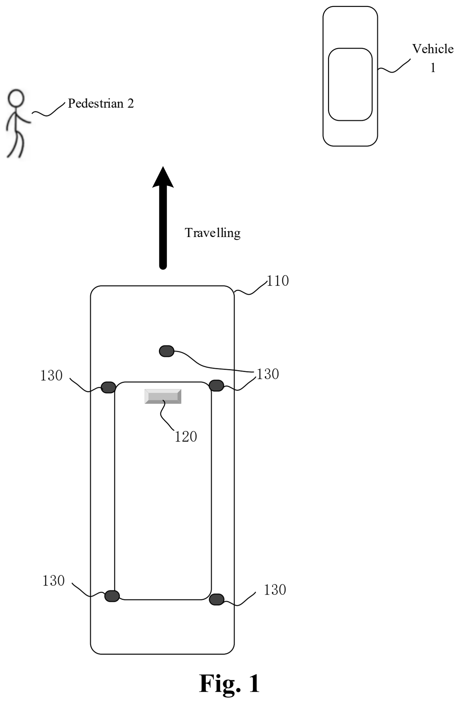

Fig. 1 illustrates an example application scenario provided by an example embodiment of the present disclosure. As shown therein, a computing platform 120 and a plurality of sensors 130 can be deployed on a vehicle 110 as required, where the sensors 130 are used to sense (i.e., observe) an external environment of the vehicle 110. The plurality of sensors 130 can be deployed in different positions and/or orientations on the vehicle 110 according to the sensing need, to achieve environmental perception for corresponding areas (e.g. a front left area, a front area, a front right area, a rear left area, a rear area, a rear right area, a left area of the vehicle body, a rear lateral area of the vehicle body, and the like) in the external environment of the vehicle 110. The plurality of sensors 130 may include the same type or different types of sensors, for example, visual sensors (i.e., camera), Light Detection and Ranging (LiDAR), Millimeter Wave (MMW), an Ultrasonic Sensor System (USS), and the like. Wherein, information on a distance, an orientation, a height, a moving speed, a pose, and the like, of an object in the external environment of the vehicle 110 relative to the vehicle 110 can be obtained through observation with LiDAR, thereby enabling detection, tracking, and identification of the object.

During traveling of the vehicle 110, the surroundings of the vehicle 110 are observed by means of the plurality of sensors 130 on the vehicle 110, to obtain first state information of the object observed at a first time point and second state information of the object observed at a second time point through different observation manners. The object may include a dynamic object, for example, a vehicle 1, a pedestrian 2. The computing platform 120 can determine a first sub-weight based on the first state information of the object observed at the first time point and the second state information of the object observed at the second point through any of the observation manners and determine a second sub-weight based on the first state information of the object observed at the first time point, further determine respective fusion weights of the first state information observed through the different observation manners based on the respective first sub-weights and the respective second sub-weights, and perform fusion based on the fusion weights, to obtain the state information of the object at the first time point.

For any of the observation manners, a fitting error can be determined by a fitting method based on the first state information of the object observed at the first time point and the second state information of the object observed at the second time point (i.e., a historical time point earlier than the first time point), and observation stability of a corresponding observation manner can be determined based on the fitting error; a relative pose of the object relative to the vehicle can be determined based on the first state information of the object observed at the first time point, the observation reliability of the corresponding observation manner can then be determined, and weight fusion can be performed for the object state information observed through the different observation manners based on the observation stability and reliability of any of the observation manners, thereby efficiently improving the accuracy and the reliability of the state information of the object, enabling an accurate basis to be provided for downstream tasks such as object behavior prediction, object trajectory prediction, vehicle traveling path planning, vehicle motion control, and the like, and thus enhancing vehicle traveling safety.

Fig. 1 is only an implementation of an example application scenario according to an embodiment of the present disclosure. From the description of the embodiments of the present disclosure, those skilled in the art could learn that any other feasible implementation could be adopted for the embodiments of the present disclosure. For example, the computing platform can also be deployed at a cloud server, a terminal device (e.g., a cellphone terminal, a tablet computer, a PC, or the like), or the like, can receive observation information from the plurality of sensors 130 through a communication connection with the vehicle driving control system, and can perform processing according the method for determining object state information provided by the embodiments of the present disclosure, to obtain state information of the object at the first time point and feed the same back to the vehicle driving control system of the vehicle.

### Example Methods

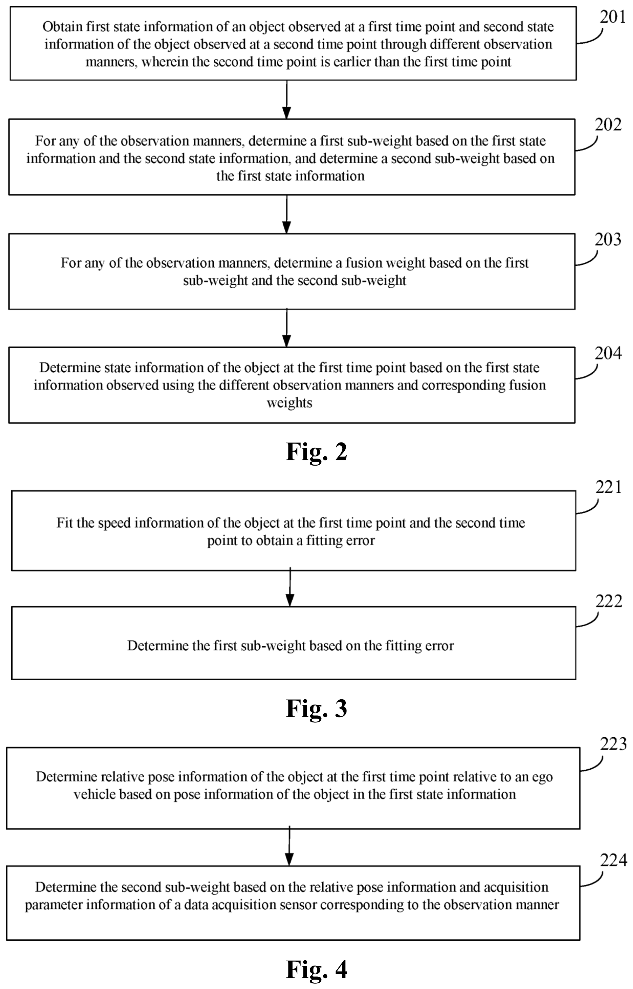

Fig. 2 illustrates a schematic flowchart of a method for determining object state information according to example embodiments of the present disclosure. This embodiment can be applied to an electronic device that may be arranged on the ego vehicle 110 as shown in Fig. 1, and referring to Fig. 2, the method includes the following steps:

Step 201: obtaining first state information of an object observed at a first time point and second state information of the object observed at a second time point through different observation manners, wherein the second time point is earlier than the first time point.

In the embodiments of the present disclosure, the observation manner may be any observation manner including, but not limited to, a front view observation, a rear view observation, a side view observation, a panoramic view observation, a Bird's Eye View (BEV) observation, and the like, which is not specifically limited herein. Wherein, the sensors deployed on the vehicle, for example, may include, but are not limited to, any number of the same type or different types of sensors deployed on different positions and/or in different orientations on the vehicle, for instance, visual sensors, LiDAR, millimeter-wave radar, ultrasonic radar, and the like.

In some implementations, the observation results of the visual sensors deployed on the different positions and oriented in different directions on the vehicle can be concatenated, to obtain state information observed through the panoramic view observation manner.

In some implementations, multi-source data fusion processing can be performed on any multiple observation results among the observation results of the visual sensors, LiDAR, millimeter-wave radar, ultrasonic radar, and the like, deployed on the vehicle, to obtain observation results for a BEV plane as the state information observed through the BEV observation manner. For the specific implementation of the multi-source data fusion processing, see the implementation of the related technology, which will not be detailed herein.

In the embodiments of the present disclosure, the first time point may be any time point when the state information of the object is observed through an observation manner. In an application scenario (e.g. an intelligent driving scenario) of tracking an object in real time, the first time point may be a time point (also referred to as current time point) when sensors corresponding to each observation manner performs data acquisition most recently during the vehicle traveling. In an application scenario of tracking an object based on historical acquisition data, the first time point may be a time point of acquiring a current view frame or data frame to undergo object detection and tracking processing.

Wherein, the second time point is before the first time point. Assumed that the first time point is time point t, the second time point may be any time points among a plurality of time points earlier than the first time point, for example, time point t-1, time point t-2, time point t-3, time point t-n (n is an integer greater than 3), and the like. Relative to the first state information observed at the first time point, the state information of the object observed at the second time point is second state information.

In the embodiments of the present disclosure, the object is any object that can be observed through each observation manner, which may include a dynamic object and a static object. The first state information is state information of the object obtained at the first time point through different observation manners, which, for example, may include, but not limited to, any one or more types of the following information of the object: a type, a position, a size, an orientation (yaw or heading), velocity, and the like. Wherein, in other possible implementations, depending on the actual needs, the state information may only include any part of the information therein, or may include more information, and the information content specifically included in the first state information is not specifically limited herein. The second state information is state information of the object obtained at the second time point through different observation manners.

In the embodiments of the present disclosure, the first state information and the second state information may be state information in a specified coordinate system, and the specified coordinate system therein, for example, may include one or more of the following coordinate systems including, but not limited to, an ego vehicle coordinate system, a world coordinate system, an image coordinate system, and the like, where the state information can be transformed between the respective coordinate systems, for example, based on transformation parameters between predetermined coordinate systems. In some implementations, the same coordinate system may be specified for the different observations manners implemented by the sensors deployed on the vehicle, or a coordinate system may also be specified for each observation manner.

In the specific implementations, if the sensors deployed on the vehicle are provided in plural, each sensor can acquire data according to its preset frame rate, and for a frame of state data acquired by any sensor at any data acquisition time point (acting as the first time point), object detection or perception processing is performed through a corresponding data processing manner, for example, a deep learning model or other algorithm model, to obtain first state information (also referred to as perception result) at the first time point.

Step 202: for any of the observation manners, determining a first sub-weight based on the first state information and the second state information, and determining a second sub-weight based on the first state information.

In the embodiments of the present disclosure, the first sub-weight is a weight value that can characterize stability of state information of the object observed through an observation manner. The first sub-weight corresponding to any observation manner can be measured based on a state information sequence of the object observed through any observation manner, where the state information sequence of the object observed through any observation manner includes: state information of the object arranged in a time sequence and observed through the observation manner respectively at a first time point and a plurality of second time points earlier than the first time point. For example, through the front view observation manner, first state information S2 of the object is obtained at the first time point, second state information S2, S3, S4, ..., Sn of the object is obtained at the plurality of second time points, and in the case, S1, S2, S3, S4, ..., Sn is the state information sequence observed through the front view observation manner.

In the embodiments of the present disclosure, based on an amount of outlier information in each piece of state information in the state information sequence observed through any observation manner, stability of the object observed through the observation manner can be determined, and the first sub-weight can then be determined.

In the embodiments of the present disclosure, the second sub-weight can characterize a weight value of reliability of state information of the object observed through an observation manner. The second sub-weight corresponding to any observation manner can be determined based on state information of the object observed at the first time point through the observation manner, and the sensor acquisition parameter of the sensor corresponding to the observation manner.

Since the sensors corresponding to different observation manners are different in terms of the deployment position and orientation, as well as the acquisition parameter, the reliability of the state information of the object acquired through different observation manners is different. By way of example, the sensor for the front view observation manner can cover objects within a distance of 150 m in the front, the BEV can cover objects in a range with a radius of 100 m, and if the object is located 125 m in the front, the reliability of the state information of the object observed through the front view observation manner is relatively high while the reliability of the state information of the object observed in the BEV is relative low.

Step 203: for any of the observation manners, determining a fusion weight based on the first sub-weight and the second sub-weight.

In the embodiments of the present disclosure, the fusion weights are weight coefficients for use in fusing first state information of the object observed through different observation manners to obtain the state information of the object at the first time point, and a fusion weight corresponding to any of the observation manners can be obtained by performing computing on the first sub-weight and the second sub-weight corresponding to the observation manner.

Wherein, a sum of the fusion weights corresponding to all the observation manners is 1. By way of example, the observation manners are three observation manners including a front view observation manner, a BEV observation manner, and a rear view observation manner, and the fusion weights of the three observation methods are respectively k₁, k₂ and k₃, where k₁, k₂ and k₃ have a value greater than 0 and less than 1, respectively, and a sum of k₁, k₂ and k₃ is 1.

Step 204: determining state information of the object at the first time point based on the first state information observed using the different observation manners and corresponding fusion weights.

In the embodiments of the present disclosure, the state information of the object at the first time point is fusion state information obtained by fusing the first state information observed through the different observation manners. The fusion state information can be fed back to the driving control system of the vehicle, to enable an accurate basis to be provided for the downstream tasks such as object behavior prediction, object trajectory prediction, vehicle traveling path planning, vehicle motion control, and the like.

The method for determining object state information provided by the embodiments of the present disclosure includes: obtaining first state information of an object observed at a first time point and second state information of the object observed at a second time point through different observation manners, where the second time point is earlier than the first time point; for any of the observation manners, determining a first sub-weight based on the first state information and the second state information, and determining a second sub-weight based on the first state information; for any of the observation manners, determining a fusion weight based on the first sub-weight and the second sub-weight; and determining state information of the object at the first time point based on the first state information observed using the different observation manners and corresponding fusion weights. In this way, the fusion weights are adaptively determined based on the state information from the observation manners. This improves the reliability of the fused state information, thereby providing more accurate input for downstream tasks such as object behavior prediction, object trajectory prediction, vehicle path planning, vehicle motion control, and thus enhancing vehicle driving safety.

In some implementations therein, after the state information of the object at the first time point is obtained through fusion, the state information at the first time point can be further added to the observation sequence, where the observation sequence includes state information of the object at the second time point. By adding to the observation sequence the state information of the object at the first time point obtained through fusion, it is helpful for the driving control system of the vehicle to use the state information in the observation sequence as a basis when performing downstream tasks based on the state information of the object, thereby improving the execution accuracy and reliability for the downstream tasks.

Wherein, the observation sequence may be a sliding window sequence indicating that the size of the observation sequence is fixed, and the data in the sliding window sequence includes state information of the object at the first time point, and state information of the object at a preset number of second time points. In this implementation, by setting the observation sequence as a sliding window sequence, it is helpful for capturing a local time feature of the object.

Wherein, the first state information and the second state information obtained through different observation manners respectively include a velocity of the object. Referring to Fig. 3, on the basis of the embodiment as shown in Fig. 2, the operation of determining the first sub-weight in the step 202 may include the following steps:

Step 221: fitting the velocity information of the object at the first time point and the second time point to obtain a fitting error.

Wherein, fitting is a data analysis method, and by fitting velocity information at the first time point and velocity information at a plurality of second time points, a pattern and changes of the velocity of the observed object can be determined, and the stability of the velocity of the observed object then can be determined.

In the embodiments of the present disclosure, a fitting error is used to evaluate a data fitting effect, which can measure a degree of deviation between the fitted curve and the original data, where a greater fitting error indicates a poorer stability of a velocity sequence consisting of velocity information of the object observed at the first time point and a plurality of second time points before the first time point, and a lower fitting error indicates a better stability of the velocity sequence consisting of the velocity information of the object observed at the first time point and the plurality of second time points before the first time point.

In the embodiments of the present disclosure, the velocity information at the first time point and the velocity information at the second time point can be fit using multiple fitting methods, for example, ordinary least squares, stepwise regression, polynomial fitting, logarithmic fitting, and the like, where the fitting methods are not limited herein.

Step 222: determining the first sub-weight based on the fitting error.

In the embodiments of the present disclosure, the first sub-weight can be determined based on the fitting error and a mapping relationship between a fitting error and a first sub-weight.

In the embodiments of the present disclosure, in order to enable the corresponding first sub-weight to be automatically determined based on the fitting error, mapping relationships between the fitting errors and the first sub-weights can be preset in a device for performing the method for determining object state information, for example, the vehicle 110 in Fig. 1, where the mapping relationships can be learned based on massive offline data. A greater fitting error indicates a poorer stability of velocity information of the object at the first time point and the velocity information of the object at the plurality of second time points, and thus corresponds to a smaller first sub-weight. For example, when the fitting error is 0.1, the first sub-weight is 0.6, and when the fitting error is 0.3, the first sub-weight 0.4.

By, for any observation manner, fitting first state information of the object at the first time point and state information of the object at the second time point, and determining a first sub-weight associated with observation stability of the observation manner, the method for determining a first sub-weight provided by the embodiments of the present disclosure is helpful for suppressing the impact of observation jitter or frequent jumps on final fusion state information, and thus can improve the accuracy and reliability of the final fusion state information.

Wherein, the first state information obtained through different observation manners includes pose information of the object, and referring to Fig. 4, on the basis of the embodiment as shown in Fig. 2, the operation of determining the second sub-weight in the step 202 includes the following steps:

Step 223: determining relative pose information of the object at the first time point relative to an ego vehicle based on pose information of the object in the first state information.

Wherein, the pose information of the ego vehicle may be pose information in any one or more of coordinate systems including an ego vehicle coordinate system, a world coordinate system, an image coordinate system, and the like.

In the embodiments, if the obtained pose information of the object is pose information in the ego vehicle coordinate system, a relative pose of the object relative to the ego vehicle can be determined directly based on the pose information of the object.

In the embodiments of the present disclosure, if the obtained pose information of the object is coordinates in the world coordinate system or the image coordinate system, rather than those in the ego vehicle coordinate system, the pose information of the object can be transformed into that in the ego vehicle coordinate system based on pre-determined transformation parameters between coordinate systems, and the relative pose of the object relative to the ego vehicle can be determined based on the coordinate information in the ego vehicle coordinate system.

Step 224: determining the second sub-weight based on the relative pose information and acquisition parameter information of a data acquisition sensor corresponding to the observation manner.

In the embodiments of the present disclosure, acquisition parameter information of a data acquisition sensor is used for indicating sensor parameters. For example, the acquisition parameter information of the LiDAR includes, but is not limited to: a ranging range, a ranging accuracy, a field of view, a measurement range, a measurement accuracy, and the like, and the acquisition parameter information of the visual sensor includes, but is not limited to: a field of view, a focal length, and the like.

In the embodiments of the present disclosure, the second sub-weight can be determined in the following steps: determining scene prior information corresponding to the observation manner based on the acquisition parameter information of the data acquisition sensor corresponding to the observation manner, the scene prior information characterizing a mapping relationship between relative pose information and a second sub-weight; and determining the second sub-weight based on the relative pose information of the object at the first time point relative to the ego vehicle, and the scene prior information.

Specifically, based on the acquisition parameters and the installation position of the data acquisition sensor, it can be determined which range of objects the data acquisition sensor can observe and which range it cannot observe, and the scene prior information corresponding to the different observation manners can thus be determined. The range can be described with reference to the relative pose of the ego vehicle.

Wherein, the scene prior information is used for characterizing a mapping relationship between relative pose information and second sub-weights, and since the second sub-weight is a weight value that can characterize reliability of state information of the object observed through an observation manner, the scene prior information can be used to characterize reliability of the state information of the object observed through the corresponding observation manner in the presence of different relative pose information. The scene prior information corresponding to the different observation manners can be obtained based on the acquisition parameters of the data acquisitions sensors corresponding to the observation manners, or can be obtained by summarizing a large amount of empirical data. For example, for an object at an edge of a front view camera, the object may not be observed completely, resulting in a low reliability of the state information of the object observed through the front view observation manner, but the state information observed obtained through a BEV observation manner is not impacted by this factor, and in the scenario, the fusion weight of the BEV observation manner can be increased. For another example, as summarized based on empirical data, for an object located in a center of a road, state information obtained through the front view observation manner is generally more accurate and more reliable than that obtained through the BEV observation manner, and the second sub-weight corresponding to the front view observation manner can be increased for the object located in the center of the road.

Wherein, the mapping relationship between the relative pose information and the second sub-weight obtained based on the acquisition parameter information of the data acquisition sensor and/or empirical data can be stored in an electronic device for performing the method for determining the object state information.

By, for any observation, determining relative pose information of the object relative to the ego vehicle at the first time point based on pose information of the object in the first state information at the first time point, and further determining a second sub-weight associated with an observation reliability of the observation manner, the method for determining the second sub-weight provided by the embodiments of the present disclosure is helpful for improving the impact of the state information of the advantageous-scenario observation manner on the final fusion state information, and thus can improve the accuracy and the reliability of the final fusion state information.

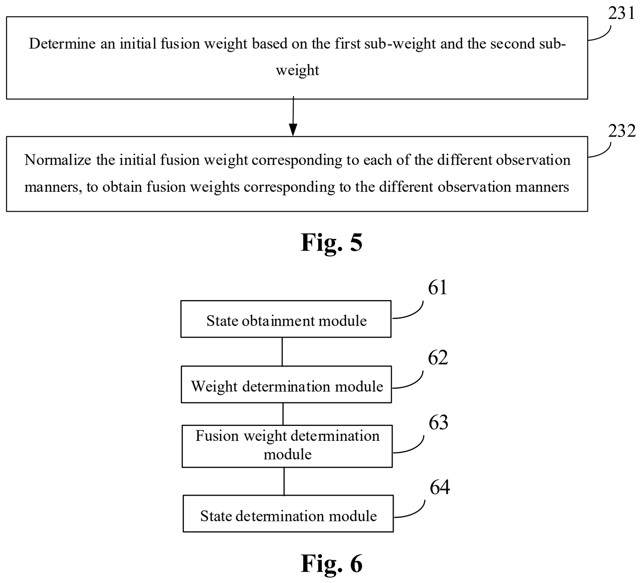

Referring to Fig. 5, on the basis of the embodiment shown in Fig. 2, the step 203 includes the following steps:

Step 231: determining an initial fusion weight based on the first sub-weight and the second sub-weight.

In the embodiments of the present disclosure, for any observation manner, the initial fusion weight corresponding to the observation manner can be obtained by performing operations such as weight addition, multiplication, and the like, on the first sub-weight and the second sub-weight.

Step 232: normalizing the initial fusion weight corresponding to the different observation manners, to obtain fusion weights corresponding to the different observation manners.

In this embodiment, by normalizing the initial fusion weight corresponding to the different observation manners, each of the fusion weights corresponding to the different observation manners has a value greater than 0 and less than 1, and the sum of the fusion weights corresponding to the different observation manners is 1.

By way of example, assumed that first state information of the object at the first time point and second state information of the object at the second time point are observed through three observation manners, the first sub-weights determined based on the first state information and the second state information at the second time point observed through the respective observation manners are respectively 1/5, 2/5, and 2/5, and the second sub-weights determined based on the first state information through the respective observation manners are respectively 1/3, 1/6 and 1/2, the initial fusion weights for the three observation manners obtained through weight multiplication are respectively 1/5 * 1/3 = 1/15, 2/5 * 1/6 = 1/15, and 2/5 * 1/2 = 1/5; by setting the sum of the initial fusion weights for the three observation manners to 1, the normalized fusion weights of the three observation manners can be obtained as 1/5, 1/5, and 3/5, respectively.

In addition to being obtained based on the first sub-weight and the second sub-weight through weight multiplication, as described in the above example, the initial fusion weight for each observation manner can be obtained through weight addition, and then normalized, to obtain the fusion weight.

The method for determining fusion weights provided by the embodiments of the present disclosure includes obtaining an initial fusion weight for any observation manner based on the first sub-weight and the second sub-weight corresponding to the observation manner, and then performing weight normalization, to obtain fusion weights corresponding to different observation manners. By effectively fusing the first sub-weight and the second sub-weight, the embodiments of the present disclosure can improve the stability and the reliability of the state information observed through any of the observation manners, to enable adaptive determination of the fusion weight.

### Example Apparatuses

Fig. 6 illustrates a block diagram of an apparatus for determining object state information according to example embodiments of the present disclosure. The apparatus for determining object state information according to embodiments of the present disclosure can be used to implement the method of determining object state information according to any of the embodiments of the present disclosure. As shown therein, in an embodiment, the apparatus for determining object state information includes: a state obtainment module 61 configured to obtain first state information of an object observed at a first time point and second state information of the object observed at a second time point through different observation manners, where the second time point is earlier than the first time point; a weight determination module 62 configured, for any of the observation manners, to determine a first sub-weight based on the first state information and the second state information, and determine a second sub-weight based on the first state information; a fusion weight determination module 63 configured, for any of the observation manners, to determine a fusion weight based on the first sub-weight and the second sub-weight; and a state determination module 64 configured to determine state information of the object at the first time point based on the first state information observed using the different observation manners and corresponding fusion weights.

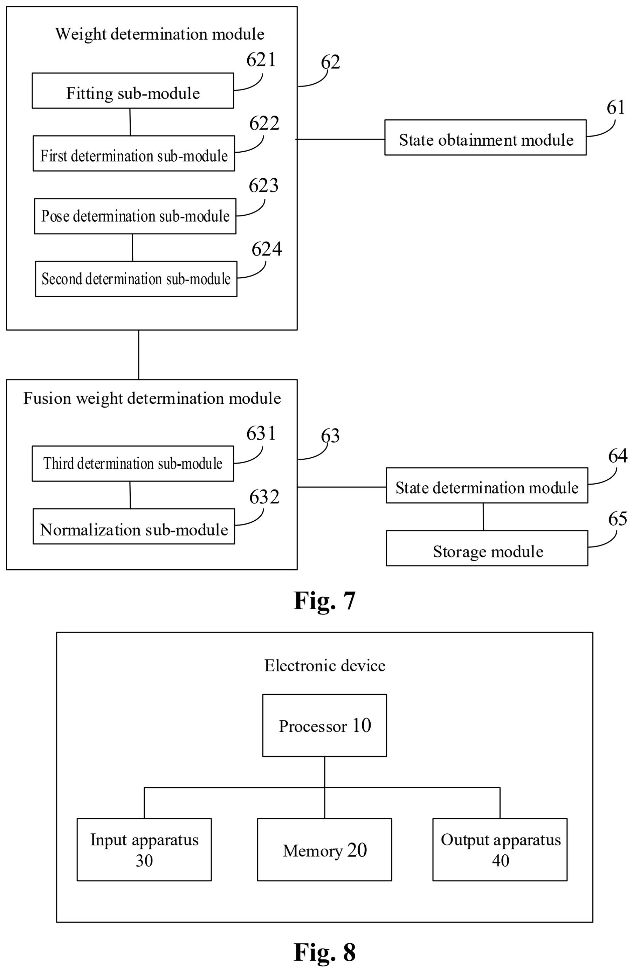

Fig. 7 illustrates a block diagram of an apparatus for determining object state information accordingly to another example embodiment of the present disclosure. Referring to Fig. 7, on the basis of the embodiment as shown in Fig. 6, in the further embodiment, the state information includes velocity information.

The weight determination module 62 may include: a fitting sub-module 621 configured to fit the velocity information of the object at the first time point and the second time point to obtain a fitting error; and a first determination sub-module 622 configured to determine the first sub-weight based on the fitting error, wherein the first determination sub-module 622 is specifically configured to: determine the first sub-weight based on the fitting error and a preset mapping relationship between a fitting error and a first sub-weight.

In the further embodiment, the weight determination module 62 may include: a pose determination sub-module 623 configured to determine relative pose information of the object at the first time point relative to an ego vehicle based on pose information of the object in the first state information; and a second determination sub-module 624 configured to determine the second sub-weight based on the relative pose information and acquisition parameter information of a data acquisition sensor corresponding to the observation manner.

In the further embodiment, the second determination sub-module 624 is specifically configured to: determine scene prior information corresponding to the observation manner based on the acquisition parameter information of the data acquisition sensor corresponding to the observation manner, the scene prior information characterizing a mapping relationship between relative pose information and a second sub-weight; and determine the second sub-weight based on the relative pose information of the object at the first time point relative to the ego vehicle, and the scene prior information.

In the further embodiment, the fusion weight determination module 63 may include: a third determination sub-module 631 configured to determine an initial fusion weight based on the first sub-weight and the second sub-weight; and a normalization sub-module 632 configured to normalize the initial fusion weight corresponding to the different observation manners, to obtain fusion weights corresponding to the different observation manners.

In the further embodiment, the apparatus for determining object state information may further include:
a storage module 65 configured to add the state information at the first time point to an observation sequence, the observation sequence comprising state information of the object at the second time point.

Wherein, the observation sequence is a sliding window sequence.

For the advantageous technical effects corresponding to the example embodiment of the apparatus, see the corresponding advantageous technical effects described above in the section of Example Method, which will not be detailed herein for brevity.

### Example Electronic Device

Fig. 8 illustrates a diagram of a structure of an electronic device provided by embodiments of the present disclosure. As shown therein, the electronic device includes at least one processor 10 and a memory 20.

The processor 10 may be a Central Processing Unit (CPU) or other form of processing unit with a data processing capability and/or an instruction execution capability, and can control other components in the electronic device to perform a desired function. The memory 20 may include one or more computer program products that may include various forms of computer readable storage media, for example, a volatile memory and/or a non-volatile memory. The volatile memory may include, for example, a Random Access Memory (RAM) and/or a cache, and the like. The non-volatile memory may include, for example, a Read-Only Memory (ROM), a hard disk, a flash memory, and the like. The computer readable storage medium may have one or more computer program instructions stored thereon, and the processor 10 can run the one or more computer program instructions to implement the methods described above in the various embodiments of the present disclosure, and/or other desired functions.

In an example, the electronic device may include: an input apparatus 30 and an output apparatus 40, where the components are interconnected via a bus system and/or a connection mechanism in other form (not shown). The input apparatus 30 may further include, for example, a keyboard, a mouse and the like. The output apparatus 40 can output various types of information to the outside, which may include, for example, a display, a speaker, a printer, a communication network and remote output apparatus connected therewith, and the like.

For simplicity, Fig. 8 only shows some components related to the present disclosure in the electronic device, and omits therefrom components such as a bus, an input/output interface, and the like. In addition, according to the specific application, the electronic device may further include any other appropriate components.

### Example computer program product and computer readable storage medium

In addition to the methods and apparatus described above, the embodiments of the present disclosure further provide a computer program product including computer program instructions, where the computer program instructions, when run by the processor, cause the processor to execute steps of the methods according to the various embodiments of the present disclosure described above in the "Example Method" section.

A computer program product can written computer program code for performing operations of the present disclosure by using one or more program design language or any combination, where the program design language includes, but is not limited to, object oriented program design language such as Java, C++, and the like, and further includes conventional process-type program design language such as "C" or similar program design language. The program code may be completely or partially executed on a user computer, performed as an independent software packet, partially executed on the user computer and partially executed on a remote computer, or completely executed on the remote computer or a server.

Moreover, the embodiments of the present disclosure may further relate to a computer readable storage medium having computer program instructions stored thereon, where the computer program instructions, when run by the processor, cause the processor to execute steps of the method for determining object state information according to the various embodiments of the present disclosure described above in the "Example Method" section.

The computer readable storage medium may be a readable medium or any combination of a plurality of readable media. The readable medium may be a readable signal medium or a readable storage medium. A readable medium may include, but is not limited to, an electronic, magnetic, optical, electromagnetic, infrared, or semiconductor system, apparatus, or device, or any suitable combination of the foregoing. More specific examples (a non-exhausting list) of a computer-readable storage medium would include an electrical connection based on one or more wires, a portable computer diskette, a hard disk, a Random Access Memory (RAM), a Read-Only Memory (ROM), an Erasable Programmable Read-Only Memory (EPROM or flash memory), an optical fiber, a Compact Disc Read-Only memory (CD-ROM), an optical storage device, a magnetic storage device, or any suitable combination of the foregoing.

Although the basic principles of the present disclosure have been described above with reference to the specific embodiments, the advantages, benefits, effects, and the like are merely mentioned herein as examples, without limitation, which should not be construed as essentials of each embodiment of the present disclosure. In addition, the details disclosed above are provided only for illustration and ease of understanding, rather than limitation, which do not require that the present disclosure be implemented with those details.

Those skilled in the art are allowed to make various modifications and variations to the present disclosure without departing from the spirits and scope described herein. Therefore, if the modifications and variations thereto fall within the scope defined by the claims of the present disclosure and the equivalents thereof, the present disclosure is also intended to cover those modifications and variations.

## Claims

1. A method for determining object state information, comprising:
obtaining (201) first state information of an object observed at a first time point and second state information of the object observed at a second time point through different observation manners, wherein the second time point is earlier than the first time point;
for any of the observation manners, determining (202) a first sub-weight based on the first state information and the second state information, and determining (202) a second sub-weight based on the first state information;
for any of the observation manners, determining (203) a fusion weight based on the first sub-weight and the second sub-weight; and
determining (204) state information of the object at the first time point based on the first state information observed using the different observation manners and corresponding fusion weights.

2. The method of claim 1, wherein the state information comprises velocity information, and determining (202) the first sub-weight based on the first state information and the second state information comprises:
fitting (221) the velocity information of the object at the first time point and the second time point to obtain a fitting error; and
determining (222) the first sub-weight based on the fitting error.

3. The method of claim 2, wherein determining (222) the first sub-weight based on the fitting error comprises:
determining the first sub-weight based on the fitting error and a preset mapping relationship between a fitting error and a first sub-weight.

4. The method of any of claims 1-3, wherein determining (202) the second sub-weight based on the first state information comprises:
determining (223) relative pose information of the object at the first time point relative to an ego vehicle based on pose information of the object in the first state information; and
determining (224) the second sub-weight based on the relative pose information and acquisition parameter information of a data acquisition sensor corresponding to the observation manner.

5. The method of claim 4, wherein determining (224) the second sub-weight based on the relative pose information and the acquisition parameter information of the data acquisition sensor corresponding to the observation manner, comprises:
determining scene prior information corresponding to the observation manner based on the acquisition parameter information of the data acquisition sensor corresponding to the observation manner, the scene prior information characterizing a mapping relationship between relative pose information and a second sub-weight; and
determining the second sub-weight based on the relative pose in formation of the object at the first time point relative to the ego vehicle, and the scene prior information.

6. The method of any of claims 1-5, wherein determining (203) the fusion weight based on the first sub-weight and the second sub-weight comprises:
determining (231) an initial fusion weight based on the first sub-weight and the second sub-weight; and
normalizing (232) the initial fusion weight corresponding to the different observation manners, to obtain fusion weights corresponding to the different observation manners.

7. The method of any of claims 1-6, the method comprising, after determining the state information of the object at the first time point,
adding the state information at the first time point to an observation sequence, the observation sequence comprising state information of the object at the second time point.

8. The method of claim 7, wherein the observation sequence is a sliding window sequence.

9. An apparatus for determining object state information, comprising:
a state obtainment module (61) configured to obtain first state information of an object observed at a first time point and second state information of the object observed at a second time point through different observation manners, wherein the second time point is earlier than the first time point;
a weight determination module (62) configured to determine, for any of the observation manners, a first sub-weight based on the first state information and the second state information, and determine a second sub-weight based on the first state information;
a fusion weight determination module (63) configured to determine, for any of the observation manners, a fusion weight based on the first sub-weight and the second sub-weight; and
a state determination module (64) configured to determine state information of the object at the first time point based on the first state information observed using the different observation manners and corresponding fusion weights.

10. The apparatus of claim 9, wherein the weight determination module (62) comprises:
a fitting sub-module (621) configured to fit the velocity information of the object at the first time point and the second time point to obtain a fitting error; and
a first determination sub-module (622) configured to determine the first sub-weight based on the fitting error.

11. The apparatus of claim 10, wherein the first determination sub-module (622) is configured to determine the first sub-weight based on the fitting error and a preset mapping relationship between a fitting error and a first sub-weight.

12. The apparatus of any of claims 9 to 11, where the weight determination module (62) comprises:
a pose determination sub-module (623) configured to determine relative pose information of the object at the first time point relative to an ego vehicle based on pose information of the object in the first state information; and
a second determination sub-module (624) configured to determine the second sub-weight based on the relative pose information and acquisition parameter information of a data acquisition sensor corresponding to the observation manner.

13. A computer readable storage medium having computer program instructions stored thereon, wherein the computer program instructions, when executed, implement the method of any of claims 1-8.

14. An electronic device, comprising:
a memory (20) for storing a computer program product; and
a processor (10) for executing the computer program product stored in the memory (20), wherein the computer program product, when executed, implements the method of any of claims 1-8.

15. A computer program product comprising computer program instructions, wherein the computer program instructions, when executed by a processor, implement the method of any of claims 1-8.
